# EUROPÄISCHE PATENTSCHRIFT

(11) **EP 4 656 412 B1**
(45) Veröffentlichungstag und Bekanntmachung des Hinweises auf die Patenterteilung: **09.12.2026**
(21) Anmeldenummer: 25170082.9
(22) Anmeldetag: 11.04.2025
(51) Int. Cl.: B60C 11/03, B60C 11/12

(54) **FAHRZEUGREIFEN**
VEHICLE TYRE
BANDAGE PNEUMATIQUE POUR VÉHICULES

(30) Priorität: 28.05.2024 DE 102024204968
(43) Veröffentlichungstag der Anmeldung: 03.12.2025
(73) Patentinhaber: Continental Reifen Deutschland GmbH, 30175 Hannover (DE)
(72) Erfinder: Subramanian Sivanarutchelvi, Manickaraj, 30175 Hannover (DE); Brandau, Christian, 30175 Hannover (DE); Brockmann, Jürgen, 30175 Hannover (DE); Bauer, Claudia, 30175 Hannover (DE); Heinhaupt, Torsten, 30175 Hannover (DE); Seng, Matthias, 30175 Hannover (DE); Javagal Suresh, Swaroop Sharma, 30175 Hannover (DE)
(74) Vertreter: Continental Corporation

(56) Entgegenhaltungen:
- DE-A1- 102020 214 363
- JP-A- 2005 153 812
- JP-A- 2009 061 796

## Beschreibung

Die Erfindung betrifft einen Fahrzeugreifen mit einem Laufstreifen mit zwei schulterseitigen Blockreihen, zwei halbmittigen Blockreihen und einer zentralen Blockreihe, wobei die Blockreihen voneinander durch Umfangsrillen voneinander getrennt sind, welche gemeinsam mit in jeder Blockreihe parallel zueinander verlaufenden Querrillen die Blockreihen in Blöcke gliedern, wobei die Blöcke in jeder Blockreihe jeweils mit einer Anzahl von sich parallel oder mit einer Abweichung von bis zu 10° zu den Querrillen erstreckenden, schmäler als die Querrillen ausgeführten Einschnitten mit einer Breite von 0,40 mm bis 2,00 mm und einer Tiefe an der tiefsten Stelle von zumindest 50% der Profiltiefe durchquert sind,
wobei die Einschnitte in den Blöcken der zentralen Blockreihe, in den Blöcken der halbmittigen Blockreihen und in den Blöcken der schulterseitigen Blockreihen gegenseitige Abstände und, bezüglich der äußersten Einschnitte, Abstände zu den den benachbarten Blockkanten aufweisen, welche Abstände in Umfangsrichtung und in den Blockmitten an der in Umfangsrichtung vorliegenden Mittellinie der jeweiligen Blockreihe, bezogen auf deren breiteste Stelle, ermittelt sind.

Ein derartiger Fahrzeugluftreifen, welcher einen laufrichtungsgebunden gestalteten Laufstreifen aufweist, bei dem die Querrillen zwischen den Blöcken der Blockreihen insgesamt V-förmig geschwungen über die Laufstreifenbreite verlaufen, ist aus der WO 2022/100798 A1 bekannt. Die Querrillen, welche in den halbmittigen Blockreihen verlaufen, münden mit schmäleren und seichteren Verbindungsrillen in jene Umfangsrille, die auch an die zentrale Blockreihe angrenzt. Der Laufstreifen ist, wie an sich bekannt, nach einem Verfahren der Pitchlängenvariation über die Laufstreifenbreite in Umfangsabschnitte unterschiedlicher Längen gegliedert, die gemäß einer rechnerisch ermittelten Abfolge aufeinanderfolgen. Dadurch variiert auch die Anzahl der in den Blöcken der einzelnen Blockreihen vorgesehenen und diese durchquerenden Einschnitte.

Dabei ist die Anzahl der in den Blöcken der zentralen Blockreihe verlaufenden Einschnitte größer als die Anzahl der in den halbmittigen Blockreihen und den schulterseitigen Blockreihen verlaufenden Einschnitte. Der Laufstreifen des bekannten Fahrzeugreifens ist insgesamt derart ausgelegt, dass der Fahrzeugreifen gleichermaßen hinsichtlich der Trocken-, der Nässe- und der Schneeperformance verbessert sein soll.

Die EP 2 353 884 B1 offenbart einen Fahrzeugluftreifen für den Einsatz unter winterlichen Fahrbedingungen mit einem Laufstreifen mit Blockreihen, deren Blöcke mit einer Vielzahl von im Wesentlichen parallel zueinander und im Wesentlichen in axialer Richtung verlaufenden Einschnitten versehen sind. Der Laufstreifen ist bezüglich seiner Umfangsmittellinie derart asymmetrisch gestaltet, dass er einen Außenbereich und einen Innenbereich aufweist, wobei in diesen Bereichen zumindest schulterseitig strukturell unterschiedlich gestaltete Umfangsbereiche bzw. Blockreihen angeordnet sind. Die Blöcke im Innenbereich des Laufstreifens weisen eine geringere Quersteifigkeit und eine größere Umfangssteifigkeit auf als die Blöcke im Außenbereich. Darüber hinaus ist der Positivanteil schulterseitig im Innenbereich um mindestens 10 % größer als der Positivanteil schulterseitig im Außenbereich. Die höhere Quersteifigkeit an der Profilaußenseite, im Vergleich zur Profilinnenseite, soll für das Fahrverhalten des Reifens im Grenzbereich, insbesondere beim Kurvenfahren unter hoher Geschwindigkeit und/oder hoher Belastung von besonderem Vorteil sein. Die im Laufstreifeninnenbereich höhere Umfangssteifigkeit würde im Vergleich zur geringeren Umfangssteifigkeit an der Außenschulter einen höheren Abrieb bewirken, was jedoch durch den im Vergleich zum Außenbereich höheren Positivanteil im Innenbereich ausgeglichen sein soll.

Die derzeit übliche Praxis bei der Konstruktion bzw. Gestaltung von Laufstreifen für Fahrzeugreifen, die als Ganzjahresreifen oder als Winterreifen eingesetzt werden, besteht vor allem darin, die Steifigkeitsverteilung des Laufstreifens über die Schulterbereiche, den zentralen Laufstreifenbereich und die dazwischen befindlichen halbmittigen Laufstreifenbereiche zu optimieren, insbesondere um das Abriebverhalten zu verbessern bzw. einen gleichmäßigen Abrieb des Laufstreifens über seine Breite zu erzielen. Wird durch eine entsprechende Steifigkeitsoptimierung ein besserer bzw. geringerer Abrieb erreicht, kann die Folge davon sein, dass die Handlingeigenschaften, wie das Ansprechverhalten des Laufstreifens im zentralen Laufstreifenbereich, insbesondere bei Kurvenfahrt, verschlechtert sind. Die Offenbarung der JP 2005 153812 A ist ebenfalls relevant, um die Erfindung zu verstehen und zeigt einen Fahrzeugreifen, der einen Laufstreifen mit einer Anordnung von Blockreihen mit Einschnitten aufweist.

Der Erfindung liegt die Aufgabe zugrunde, bei einem Fahrzeugreifen der eingangs genannten Art die Gesamtsteifigkeitsverteilung im Laufstreifen sowohl hinsichtlich der Längs- als auch die Quersteifigkeit innerhalb bestimmter enger Grenzen zu halten. Ziel der Erfindung ist es daher vor allem, eine gleichmäßige Steifigkeitsverteilung und damit ein gleichmäßiges Abriebverhalten zu erreichen, wobei gute Handlingeigenschaften sichergestellt sein sollen.

Gelöst wird die gestellte Aufgabe erfindungsgemäß dadurch, die Anzahl (n) der Einschnitte in sämtlichen Blockreihen übereinstimmt, wobei Folgendes gilt: ${\overline{a}}_{i , i = 9 , 10 , 11} = \frac{1}{n} \sum {a}_{i}$
- a̅ᵢ: Arithmetischer Mittelwert der Abstände innerhalb einer Blockreihe
- a₉: Abstände der Einschnitte in jeder schulterseitigen Blockreihe,
- a₁₀: Abstände der Einschnitte in jeder halbmittigen Blockreihen,
- a₁₁: Abstände der Einschnitte in der zentralen Blockreihe,
- n: Anzahl der Einschnitte in jeder Blockreihe,

wobei das Verhältnis der arithmetischen Mittelwerte
a̅₉: a̅₁₀: a̅₁₁ = 88±5: 94±3: 100 beträgt, wobei a̅₁₁ > a̅₁₀ > a̅₉.

Bei einem Fahrzeugreifen gemäß der Erfindung wird daher der Laufstreifen derart ausgelegt, dass einerseits die Anzahl der Einschnitte in sämtlichen Blockreihen übereinstimmt und dass der arithmetische Mittelwert der Abstände der Einschnitte untereinander und der äußeren Einschnitte zu den Kanten der Blöcke in den einzelnen Blockreihen gemäß obigen Beziehungen erfolgt bzw. diesen genügt.

Dadurch wird der Einfluss der Abstände der Einschnitte auf die Umfangs- und Quersteifigkeit des Laufstreifens gezielt auf eine möglichst gleichmäßige Umfangs- und Quersteifigkeit gelenkt, sodass die jeweiligen Steifigkeitsunterschiede zwischen den einzelnen Blockreihen bei der Umfangssteifigkeit unter +/- 10 % des Durchschnitts aller Blockreihen und bei der Quersteifigkeit innerhalb von +/- 15 % des Durchschnitts der mittleren und der schulterseitigen Blockreihen bleiben. Die derart weitgehend gleichmäßige Steifigkeitsverteilung ermöglicht ein gleichmäßiges Abriebverhalten des Laufstreifens bei guten Handlingeigenschaften des Reifens.

Für die erwähnte Steifigkeitsbeeinflussung ist dabei eine Ausgestaltung bevorzugt, bei welcher innerhalb der Blöcke einer Blockreihe Einschnitte vorhanden sind, deren Abstände voneinander bis zu 25%, insbesondere um mindestens 5 % und bevorzugt bis zu 10%, des jeweiligen arithmetischen Mittelwerts voneinander abweichen.

Bei einer bevorzugten Ausführungsform ist der Laufstreifen des Fahrzeugreifens derart gestaltet, dass die entlang der Mittelumfangslinie ermittelte Pitchanzahl pro Meter Umfangslänge des Laufstreifens 26 bis 31 beträgt. Mit einer derartigen Pitchanzahl lässt sich die Umfangs- und Quersteifigkeit des Laufstreifens durch die obigen, die Einschnitte betreffenden Beziehungen hinsichtlich der Umfangs- und der Quersteifigkeit besonders ausgewogen auslegen.

Weitere bevorzugte Maßnahmen, die hinsichtlich einer weitgehend gleichmäßigen Steifigkeitsverteilung in Umfangs- und in Querrichtung besonders vorteilhaft sind, betreffen die Winkelung der Querrillen und der Einschnitte in den einzelnen Blockreihen relativ zur axialen Richtung und die Breite der einzelnen Blockreihen.

Diesbezüglich ist es insbesondere vorteilhaft, wenn die Querrillen und die Einschnitte in den schulterseitigen Blockreihen zur Umfangsrichtung unter einem Winkel verlaufen, welcher 75° bis 86° beträgt, wenn ferner die Querrillen und die Einschnitte in den halbmittigen Blockreihen zur Umfangsrichtung unter einem Winkel verlaufen, welcher 55° bis 65° beträgt, und des Weiteren, wenn die Querrillen und die Einschnitte in der zentralen Blockreihe Teilabschnitte aufweisen, welche mit der Umfangsrichtung des Laufstreifens, gegensinnig zueinander geneigt, jeweils einen Winkel einschließen, welcher 70° bis 80° beträgt.

Was die Breiten der Blockreihen betrifft so ist es von besonderem Vorteil, wenn die schulterseitigen Blockreihen bzw. ihre Blöcke eine in die axiale Richtung projizierte größte Breite von 19 % bis 25 % der Breite des Laufstreifens, die halbmittigen Blockreihen bzw. ihre Blöcke eine in die axiale Richtung projizierte größte Breite von 13 % bis 17 % der Breite des Laufstreifens und die zentrale Blockreihe bzw. ihre Blöcke eine in die axiale Richtung projizierte Breite von 11 % bis 15 % der Breite des Laufstreifens aufweisen.

Eine weitere, für eine gleichmäßige Steifigkeitsverteilung vorteilhafte Maßnahme besteht darin, die Umfangsrillen derart zu gestalten, dass bei einer Sicht durch die Umfangsrillen in Umfangsrichtung an jeder Stelle der Umfangsrillen eine Mindestbreite von 2,00 mm vorliegt.

Weitere Merkmale, Vorteile und Einzelheiten der Erfindung werden nun anhand der schematischen Zeichnung, die ein Ausführungsbeispiel darstellt, näher beschrieben. Dabei zeigt die einzige Zeichnungsfigur,

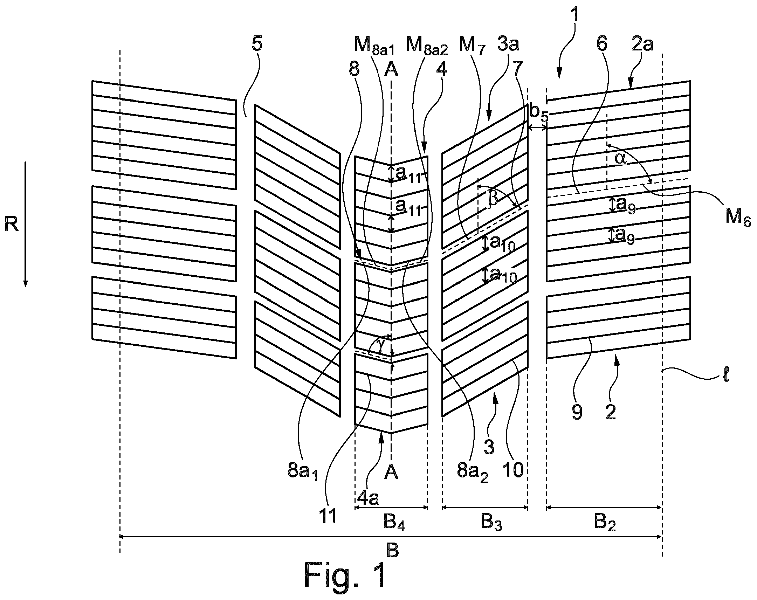

Fig. 1, eine Draufsicht auf einen Ausschnitt eines Umfangsabschnitts (als Abwicklung in die Ebene) eines Laufstreifens eines Fahrzeugreifens mit einer Ausführungsvariante der Erfindung.

Gemäß der Erfindung ausgeführte Fahrzeugreifen sind Reifen für Kraftfahrzeuge, insbesondere für mehrspurige Kraftfahrzeuge, bevorzugt für Personenkraftwagen (PKWs), Vans (Transporter) oder SUVs sowie vorzugsweise Fahrzeugluftreifen, besonders bevorzugt Fahrzeugluftreifen in Radialbauart für Felgen mit einem ganzzahligen Felgendurchmesser von 13 Zoll bis 24 Zoll, insbesondere von 18 Zoll bis 23 Zoll, wobei die Reifen zum Fahren unter winterlichen Fahrbedingungen als Winterreifen oder Ganzjahresreifen vorgesehen sind.

Fig. 1 zeigt einen Ausschnitt eines Umfangsabschnitts eines Laufstreifens 1, im Beispiel mit einer laufrichtungsgebunden ausgeführten Profilierung, von welcher in Fig. 1 drei Pitches (in Umfangsrichtung aufeinanderfolgende Umfangsabschnitte unterschiedlicher Umfangslängen) dargestellt sind, sodass ein Fahrzeugreifen mit einem derartigen Laufstreifen in einer bestimmten Abrollrichtung bei Vorwärtsfahrt am Fahrzeug zu montieren ist, wobei der Pfeil R in Fig. 1 die Abrollrichtung bei Vorwärtsfahrt angibt. Die Linie A-A kennzeichnet die zentrale Mittelumfangslinie des Laufstreifens 1. Die Profilierung des Laufstreifens 1 ist bezüglich der Mittelumfangslinie A-A spiegelsymmetrisch bzw. annähernd spiegelsymmetrisch gestaltet. Die Bodenaufstandsfläche des Laufstreifens 1 entspricht dem statisch ermittelten Footprint, ermittelt mit einem auf einer Normfelge montierten Reifen, Last bei 70 % der maximalen Tragfähigkeit, Innendruck 85 % des Normdrucks, gemäß E.T.R.T.O-Standards, und weist in axialer Richtung zwischen den seitlichen Laufstreifenrändern I eine größte Breite B auf. Die Profilierung des Laufstreifens 1 wird in der Beschreibung in den Patentansprüchen innerhalb der Breite B betrachtet.

Die Profilierung des Laufstreifens 1 setzt sich aus zwei schulterseitigen Blockreihen 2, einer zentralen, entlang der Mittelumfangslinie A-A verlaufenden Blockreihe 4 und in jeder Laufstreifenhälfte aus je einer zwischen der schulterseitigen Blockreihe 2 und der zentralen Blockreihe 4 angeordneten halbmittigen Blockreihe 3 zusammen. Die Blockreihen 2, 3 und 4 sind durch in Umfangsrichtung umlaufende Umfangsrillen 5 voneinander getrennt, welche, abgesehen von Stellen, an welchen beispielsweise Treadwearindikatoren ausgebildet sind, in der jeweils vorgesehenen maximalen Profiltiefe ausgeführt sind, die für die eingangs erwähnten bevorzugten Reifentypen in der Größenordnung von 6,00 mm bis 11,00 mm beträgt. Die Umfangsrillen 5 weisen eine insbesondere konstante Breite bs von mindestens 2,00 mm bis insbesondere 7,00 mm auf.

Über den Umfang des Laufstreifens 1 bewirken parallel zueinander verlaufende Querrillen 6 gemeinsam mit der die schulterseitige Blockreihe 2 laufstreifeninnenseitig begrenzenden Umfangsrille 5 eine Gliederung der schulterseitigen Blockreihen 2 in Blöcke 2a. In jeder Laufstreifenhälfte gliedern die Querrillen 7 gemeinsam mit zwei Umfangsrillen 5 die halbmittigen Blockreihen 3 in Blöcke 3a und Querrillen 8 gliedern gemeinsam mit den beiden mittigen Umfangsrillen 5 die zentrale Blockreihe 4 in Blöcke 4a. Die Querrillen 6 und 7 verlaufen im Beispiel jeweils gerade, sodass auch die jeweiligen Blockkanten der Blöcke 2a und 3a, welche die Querrillen 6 und 7 begrenzen, gerade verlaufen. Die Querrillen 8 in der zentralen Blockreihe 4 setzen sich vorzugsweise aus zwei gerade verlaufenden, gleich langen Teilabschnitten 8a₁ und 8a₂ zusammen, die an der Mittelumfangslinie A-A aneinander anschließen und flach V-förmig zueinander verlaufen. Die Querrillen 6 in den schulterseitigen Blockreihen 2 weisen Mittellinien M₆ auf, welche zur Umfangsrichtung unter einem Winkel α verlaufen, welcher 75° bis 86° beträgt. Die Querrillen 7 in den halbmittigen Blockreihen 3 weisen Mittellinien M₇ auf, welche zur Umfangsrichtung unter einem Winkel β verlaufen, welcher 55° bis 65° beträgt. Die Teilabschnitte 8a₁ und 8a₂ der Querrillen 8 in der zentralen Blockreihe 4 weisen Mittellinien m₈ₐ₁ und m₈ₐ₂ auf, die mit der Umfangsrichtung des Laufstreifens 1, gegensinnig zueinander geneigt, jeweils einen Winkel γ einschließen, welcher 70° bis 80° beträgt.

Sämtliche Querrillen 6, 7 und 8 weisen eine konstante oder weitgehend konstante Breite auf, die insbesondere 3,00 mm bis 6,00 mm beträgt, wobei die Querrillen 8 in der zentralen Blockreihe 4 die geringste Breite aufweisen, sodass die Breiten der Querrillen 6 und 7 jeweils größer sind. Die Querrillen 7 und 8 in den halbmittigen Blockreihen 3 und in der zentralen Blockreihe 4 weisen ferner bevorzugt übereinstimmende Tiefen auf, die vorzugsweise jeweils konstant sind und zumindest 80 %, insbesondere 90 % bis 100 % der Profiltiefe betragen. Die Querrillen 6 in den schulterseitigen Blockreihen 2 weisen insbesondere über etwa 50 % ihrer bei der Umfangsrille 5 beginnenden Erstreckung eine Tiefe auf, die der Tiefe der Querrillen 7 und 8 entspricht. In Richtung zu den Laufstreifenrändern I nimmt die Tiefe der Rillen 6 in an sich bekannter Weise kontinuierlich ab.

Die schulterseitigen Blockreihen 2 bzw. ihre Blöcke 2a weisen ferner eine in die axiale Richtung projizierte größte Breite B₂ von 19 % bis 25 % der Breite B, die halbmittigen Blockreihen 3 bzw. ihre Blöcke 3a weisen eine in die axiale Richtung projizierte größte Breite B₃ von 13 % bis 17 % der Breite B und die zentrale Blockreihe 4 bzw. ihre Blöcke 4a weisen eine in die axiale Richtung projizierte größte Breite B₄ von 11 % bis 15 % der Breite B auf.

Die Blöcke 2a, 3a und 4a sind jeweils mit einer Anzahl von Einschnitten 9 (schulterseitige Blöcke 2a), 10 (halbmittige Blöcke 3a) und 11 (zentrale Blöcke 4a) versehen, die sich jeweils parallel zueinander und vorzugsweise parallel zu den Querrillen 6, 7 und 8 erstrecken. Die Erstreckungsrichtung der Einschnitte 9, 10, 11 kann von der Erstreckungsrichtung der Querrillen 6, 7, 8 um bis zu ± 10° abweichen. Bei der in der Figur gezeigten Ausführung sind sämtliche Einschnitte 9, 10 und 11 in Draufsicht als gerade verlaufende Einschnitte dargestellt. Dabei handelt es sich um eine einfache bzw. vereinfachte Ausgestaltung der Einschnitte, die beispielsweise insgesamt gebogen und/ oder auch in Wellenform bzw. Zickzackform verlaufen können. In diesem Fall beziehen sich die nachfolgenden Angaben bezüglich der gegenseitigen Abstände der Einschnitte 9, 10 und 11 zueinander und zu den Blockkanten auf die Mittellinien der Einschnitte.

Die Einschnitte 9, 10 und 11 weisen ferner an der Laufstreifenperipherie eine Breite auf, die insbesondere 0,40 mm bis 2,00 mm, insbesondere bis 1,00 mm, beträgt, wobei sämtliche oder die meisten Einschnitte im Laufstreifen eine übereinstimmende Breite aufweisen. Die Tiefe der Einschnitte 9, 10 und 11 kann über ihre Erstreckung variieren, insbesondere weisen die Einschnitte 9, 10 und 11 eine Tiefe auf, die zumindest abschnittsweise zumindest 50 %, insbesondere bis zu 90 %, der Profiltiefe beträgt. Insbesondere die in Umfangsrillen einmündenden Randabschnitte der Einschnitte 9, 10 und 11 weisen bevorzugt eine geringere Tiefe in der Größenordnung von 20 % bis 30 % der Profiltiefe auf.

Bei der in Fig. 1 gezeigten Ausführung sind ein Pitch mit jeweils drei Einschnitten 9, 10 und 11, ein Pitch mit jeweils vier Einschnitten 9, 10 und 11 und ein Pitch mit jeweils fünf Einschnitten 9, 10 und 11 dargestellt. Je nach Pitchlänge (Umfangslänge) des jeweiligen Pitch können bis zu sieben Einschnitte 9, 10 und 11 in den Blöcken 2a, 3a und 4a ausgebildet sein. Die Anzahl der Pitches pro Meter Umfangslänge, welche entlang der Mittelumfangslinie A-A ermittelt wird, beträgt 26 bis 31 Pitches. In jedem Pitch ist weiters die Anzahl der Einschnitte 9, 10 und 11 pro Block 2a, 3a und 4a gleich, daher ist auch die Anzahl der Einschnitte 9, 10 und 11 in den Blockreihen 2, 3 und 4 gleich.

In der zentralen Blockreihe 4 bzw. in den Böcken 4a dieser Blockreihe 4 weisen die Einschnitte 11 innerhalb der Blöcke 4a gegenseitige Abstände a₁₁ und die jeweils in Umfangsrichtung äußersten Einschnitte 11 zu den benachbarten Blockkanten ebenfalls Abstände a₁₁ auf, wobei Abstände a₁₁ übereinstimmen oder voneinander abweichen können. Die Abstände a₁₁ sind in Umfangsrichtung und in den Blockmitten an der in Umfangsrichtung vorliegenden Mittellinie der Blockreihe 4, bezogen auf die breiteste Stelle, bei den Blöcken 4a daher entlang der Mittelumfangslinie A-A ermittelt. Auf analoge Weise liegen in den Blöcken 3a der halbmittigen Blockreihen 3 Abstände a₁₀ und in den Blöcken 2a der schulterseitigen Blockreihen 2 Abstände a₉ vor. Innerhalb jeder Blockreihe 2, 3 und 4 gilt über sämtliche Pitches betrachtet bezüglich des arithmetischen Mittelwerts der Abstände: ${\overline{a}}_{i , i = 9 , 10 , 11} = \frac{1}{n} \sum {a}_{i}$
- *a̅*ᵢ: Arithmetischer Mittelwert der Abstände innerhalb einer Blockreihe
- a₉: Abstände der Einschnitte in jeder schulterseitigen Blockreihe,
- a₁₀: Abstände der Einschnitte in jeder halbmittigen Blockreihen,
- a₁₁: Abstände der Einschnitte in der zentralen Blockreihe,
- n: Anzahl der Einschnitte in jeder Blockreihe,

**und** wobei das Verhältnis der arithmetischen Mittelwerte
a̅₉: a̅₁₀: a̅₁₁ = 88±5: 94±3: 100 beträgt, wobei a̅₁₁ > a̅₁₀ > a̅₉.

Die erwähnten gegenseitigen Abstände a₉, a₁₀ und a₁₁ bewegen sich in innerhalb des Bereichs von 2,50 mm bis 7,00 mm.

Bei einer alternativen Ausführung verlaufen die Umfangsrillen 5 in Zickzack- oder in Wellenform. Dabei ist die Ausgestaltung derart, dass bei einer Sicht durch die Umfangsrillen 5 genau in Umfangsrichtung an jeder Stelle der Umfangsrillen 5 eine Mindestbreite von 2,00 mm, ein sogenannte "look through" von 2,00 mm vorliegt.

### Bezugszeichenliste

- 1: Laufstreifen
- 2: schulterseitige Blockreihe
- 2a: Block
- 3: halbmittige Blockreihe
- 3a: Block
- 4: zentrale Blockreihe
- 4a: Block
- 5: Umfangsrille
- 6, 7, 8: Querrille
- 8a₁, 8a₂: Teilabschnitt
- 9, 10, 11: Einschnitt
- α, β, γ: Winkel
- a₉, a₁₀, a₁₁: Abstand
- A-A: Mittelumfangslinie
- B: Breite (Laufstreifen)
- B₂, B₃, B₄: Breite
- b₅: Breite (Umfangsrille 5)
- I: Laufstreifenrand
- M₆, M₇: Mittellinie
- M₈ₐ₁, Maₐ₂: Mittellinie
- R: Abrollrichtung bei Vorwärtsfahrt

## Patentansprüche

1. Fahrzeugreifen mit einem Laufstreifen (1) mit zwei schulterseitigen Blockreihen (2), zwei halbmittigen Blockreihen (3) und einer zentralen Blockreihe (4), wobei die Blockreihen (2, 3, 4) voneinander durch Umfangsrillen (5) getrennt sind, welche gemeinsam mit in jeder Blockreihe (2, 3, 4) parallel zueinander verlaufenden Querrillen (6, 7, 8) die Blockreihen (2, 3, 4) in Blöcke (2a, 3a, 4a) gliedern, wobei die Blöcke (2a, 3a, 4a) in jeder Blockreihe (2, 3, 4) jeweils mit einer Anzahl von sich parallel oder mit einer Abweichung von bis zu ± 10° zu den Querrillen (6, 7, 8) erstreckenden, schmäler als die Querrillen (6, 7, 8) ausgeführten Einschnitten (9, 10, 11) mit einer Breite von 0,40 mm bis 2,00 mm und einer Tiefe an der tiefsten Stelle von zumindest 50% der Profiltiefe durchquert sind,
wobei die Einschnitte (11, 10, 9) in den Blöcken (4a) der zentralen Blockreihe (4), in den Blöcken (3a) der halbmittigen Blockreihen (3) und in den Blöcken (2a) der schulterseitigen Blockreihen (2) gegenseitige Abstände (a₁₁, a₁₀, a₉) und, bezüglich der äußersten Einschnitte (11, 10, 9), Abstände (a₁₁, a₁₀, a₉) zu den benachbarten Blockkanten aufweisen, welche Abstände (a₁₁, a₁₀, a₉) in Umfangsrichtung und in den Blockmitten an der in Umfangsrichtung vorliegenden Mittellinie der jeweiligen Blockreihe (2, 3, 4), bezogen auf deren breiteste Stelle, ermittelt sind,
wobei die Anzahl (n) der Einschnitte (9, 10, 11) in sämtlichen Blockreihen (2a, 3a, 4a) übereinstimmt,
**dadurch gekennzeichnet, dass** Folgendes gilt: ${\overline{a}}_{i , i = 9 , 10 , 11} = \frac{1}{n} \sum {a}_{i}$
*a̅ᵢ* arithmetischer Mittelwert der Abstände innerhalb einer Blockreihe
a₉ Abstände der Einschnitte in jeder schulterseitigen Blockreihe,
a₁₀ Abstände der Einschnitte in jeder halbmittigen Blockreihen,
a₁₁ Abstände der Einschnitte in der zentralen Blockreihe,
n Anzahl der Einschnitte in jeder Blockreihe,
und wobei das Verhältnis der arithmetischen Mittelwerte
a̅₉: a̅₁₀: a̅₁₁ = 88±5: 94±3: 100 beträgt, wobei a̅₁₁ > a̅₁₀ > a̅₉.

2. Fahrzeugreifen nach Anspruch 1, **dadurch gekennzeichnet, dass** innerhalb der Blöcke (2a, 3a, 4a) einer Blockreihe (2, 3, 4) Einschnitte (9, 10, 11) vorhanden sind, deren Abstände voneinander bis zu 25%, insbesondere um mindestens 5% und bevorzugt bis zu 10%, des jeweiligen arithmetischen Mittelwerts (a̅₉, a̅₁₀, a̅₁₁) voneinander abweichen.

3. Fahrzeugreifen nach Anspruch 1 oder 2, **dadurch gekennzeichnet, dass** die entlang der Mittelumfangslinie (A-A) ermittelte Pitchanzahl pro Meter Umfangslänge des Laufstreifens (1) 26 bis 31 beträgt.

4. Fahrzeugreifen nach einem der Ansprüche 1 bis 3, **dadurch gekennzeichnet, dass** die Querrillen (6) und die Einschnitte (9) in den schulterseitigen Blockreihen (2) zur Umfangsrichtung unter einem Winkel (α) verlaufen, welcher 75° bis 86° beträgt.

5. Fahrzeugreifen nach einem der Ansprüche 1 bis 4, **dadurch gekennzeichnet, dass** die Querrillen (7) und die Einschnitte (10) in den halbmittigen Blockreihen (3) zur Umfangsrichtung unter einem Winkel (β) verlaufen, welcher 55° bis 65° beträgt.

6. Fahrzeugreifen nach einem der Ansprüche 1 bis 5, **dadurch gekennzeichnet, dass** die Querrillen (8) und die Einschnitte (11) in der zentralen Blockreihe (4) Teilabschnitte (8a₁) und (8a₂) aufweisen, welche mit der Umfangsrichtung des Laufstreifens (1), gegensinnig zueinander geneigt, jeweils einen Winkel (γ) einschließen, welcher 70° bis 80° beträgt.

7. Fahrzeugreifen nach einem der Ansprüche 1 bis 6, **dadurch gekennzeichnet, dass** die schulterseitigen Blockreihen (2) bzw. ihre Blöcke (2a) eine in die axiale Richtung projizierte größte Breite (B₂) von 19 % bis 25 % der Breite (B) des Laufstreifens (1), die halbmittigen Blockreihen (3) bzw. ihre Blöcke (3a) eine in die axiale Richtung projizierte größte Breite (B₃) von 13 % bis 17 % der Breite (B) des Laufstreifens und die zentrale Blockreihe (4) bzw. ihre Blöcke (4a) eine in die axiale Richtung projizierte größte Breite (B₄) von 11 % bis 15 % der Breite (B) des Laufstreifens aufweisen.

8. Fahrzeugreifen nach einem der Ansprüche 1 bis 7, **dadurch gekennzeichnet, dass** die Umfangsrillen (5) derart gestaltet sind, dass bei einer Sicht durch die Umfangsrillen (5) genau in Umfangsrichtung an jeder Stelle der Umfangsrillen (5) eine Mindestbreite von 2,00 mm vorliegt.

## Claims

1. Vehicle tyre having a tread (1) with two shoulder-side block rows (2), two semi-central block rows (3) and a central block row (4), wherein the block rows (2, 3, 4) are separated from one another by circumferential grooves (5) which together with transverse grooves (6, 7, 8) running parallel to one another in each block row (2, 3, 4) divide the block rows (2, 3, 4) into blocks (2a, 3a, 4a), wherein the blocks (2a, 3a, 4a) in each block row (2, 3, 4) are each traversed by a number of sipes (9, 10, 11) extending parallel or with a deviation of up to ± 10° with respect to the transverse grooves (6, 7, 8), designed to be narrower than the transverse grooves (6, 7, 8) and having a width of 0.40 mm to 2.00 mm and a depth at the deepest point of at least 50% of the profile depth,
wherein the sipes (11, 10, 9) in the blocks (4a) of the central block row (4), in the blocks (3a) of the semi-central block rows (3) and in the blocks (2a) of the shoulder-side block rows (2) are at mutual distances (a₁₁, a₁₀, a₉) and, with respect to the outermost sipes (11, 10, 9), distances (a₁₁, a₁₀, a₉) from the adjacent block edges, which distances (a₁₁, a₁₀, a₉) are determined in the circumferential direction and in the block centres at the centre line, present in the circumferential direction, of the respective block row (2, 3, 4), in relation to the widest point thereof, wherein the number (n) of sipes (9, 10, 11) in all block rows (2a, 3a 4a) corresponds, **characterized in that** the following applies: ${\overline{a}}_{i , i = 9 , 10 , 11} = \frac{1}{n} \sum {a}_{i}$
a̅ᵢ arithmetic mean value of the distances within a block row
a₉ distances between the sipes in each shoulder-side block row,
a₁₀ distances between the sipes in each semi-central block row,
a₁₁ distances between the sipes in the central block row,
n number of sipes in each block row, and where the ratio of the arithmetic
mean values a̅₉:a̅₁₀:a̅₁₁ = 88±5: 94±3: 100, where a̅₁₁ > a̅₁₀ > a̅₉.

2. Vehicle tyre according to Claim 1, **characterized in that** sipes (9, 10, 11) are present within the blocks (2a, 3a, 4a) of a block row (2, 3, 4), the distances of the sipes from one another deviating from one another by up to 25%, in particular by at least 5% and preferably up to 10%, of the respective arithmetic mean value (a̅₉, a̅₁₀, a̅₁₁).

3. Vehicle tyre according to Claim 1 or 2, **characterized in that** the pitch number per metre of circumferential length of the tread (1) determined along the central circumferential line (A-A) is 26 to 31.

4. Vehicle tyre according to any of Claims 1 to 3, **characterized in that** the transverse grooves (6) and the sipes (9) in the shoulder-side block rows (2) run at an angle (α) of 75° to 86° to the circumferential direction.

5. Vehicle tyre according to any of Claims 1 to 4, **characterized in that** the transverse grooves (7) and the sipes (10) in the semi-central block rows (3) run at an angle (β) of 55° to 65° to the circumferential direction.

6. Vehicle tyre according to any of Claims 1 to 5, **characterized in that** the transverse grooves (8) and the sipes (11) in the central block row (4) have partial portions (8a₁) and (8a₂) which each form an angle (γ) of 70° to 80° with the circumferential direction of the tread (1), inclined in opposite directions with respect to one another.

7. Vehicle tyre according to any of Claims 1 to 6, **characterized in that** the shoulder-side block rows (2) or the blocks (2a) thereof have a maximum width (B₂), projected in the axial direction, of 19% to 25% of the width (B) of the tread (1), the semi-central block rows (3) or the blocks (3a) thereof have a maximum width (B₃), projected in the axial direction, of 13% to 17% of the width (B) of the tread, and the central block row (4) or the blocks (4a) thereof have a maximum width (B₄), projected in the axial direction, of 11% to 15% of the width (B) of the tread.

8. Vehicle tyre according to any of Claims 1 to 7, **characterized in that** the circumferential grooves (5) are designed in such a way that, when viewed through the circumferential grooves (5), there is a minimum width of 2.00 mm precisely in the circumferential direction at each point of the circumferential grooves (5).

## Revendications

1. Pneumatique de véhicule présentant une bande de roulement (1) présentant deux rangées de blocs côté épaulement (2), deux rangées de blocs semi-centrales (3) et une rangée de blocs centrale (4), dans lequel les rangées de blocs (2, 3, 4) sont séparées les unes des autres par des rainures circonférentielles (5) qui, conjointement avec des rainures transversales (6, 7, 8) s'étendant parallèlement les unes aux autres dans chaque rangée de blocs (2, 3, 4), subdivisent les rangées de blocs (2, 3, 4) en blocs (2a, 3a, 4a), dans lequel les blocs (2a, 3a, 4a) de chaque rangée de blocs (2, 3, 4) sont chacun traversés par un certain nombre d'incisions (9, 10, 11) s'étendant parallèlement aux rainures transversales (6, 7, 8) ou avec un écart allant jusqu'à ± 10° par rapport à celles-ci, réalisées plus étroites que les rainures transversales (6, 7, 8), présentant une largeur de 0,40 mm à 2,00 mm et une profondeur, à l'endroit le plus profond, d'au moins 50 % de la profondeur du profil,
dans lequel les incisions (11, 10, 9) dans les blocs (4a) de la rangée de blocs centrale (4), dans les blocs (3a) des rangées de blocs semi-centrales (3) et dans les blocs (2a) des rangées de blocs côté épaulement (2) présentent des distances mutuelles (a₁₁, a₁₀, a₉) et, pour les incisions (11, 10, 9) les plus extérieures, des distances (a₁₁, a₁₀, a₉) par rapport aux arêtes de bloc voisines, lesquelles distances (a₁₁, a₁₀, a₉) sont déterminées dans la direction circonférentielle et au milieu des blocs, sur la ligne médiane s'étendant dans la direction circonférentielle de la rangée de blocs respective (2, 3, 4), par rapport à l'endroit le plus large de celle-ci,
dans lequel le nombre (n) d'incisions (9, 10, 11) est identique dans toutes les rangées de blocs (2a, 3a 4a), **caractérisé en ce que** les conditions suivantes sont satisfaites : ${\overline{a}}_{i , i = 9 , 10 , 11} = \frac{1}{n} \sum {a}_{i}$
a̅i moyenne arithmétique des distances au sein d'une rangée de blocs
a₉ distances entre les incisions dans chaque rangée de blocs côté épaulement,
a₁₀ distances entre les incisions dans chaque rangée de blocs semi-centrale,
a₁₁ distances entre les incisions dans la rangée de blocs centrale,
n nombre d'incisions dans chaque rangée de blocs, et dans lequel le rapport des moyennes arithmétiques a₉:a₁₀:a₁₁ = 88±5: 94±3: 100, dans lequel a̅₁₁ > a̅_{10 >} a̅₉.

2. Pneumatique de véhicule selon la revendication 1, **caractérisé en ce que**, à l'intérieur des blocs (2a, 3a, 4a) d'une rangée de blocs (2, 3, 4), sont présentes des incisions (9, 10, 11) dont les distances mutuelles diffèrent les unes des autres jusqu'à 25%, notamment d'au moins 5% et de préférence jusqu'à 10%, de la moyenne arithmétique respective (a̅₉, a̅₁₀, a̅₁₁) .

3. Pneumatique de véhicule selon la revendication 1 ou 2, **caractérisé en ce que** le nombre de pas déterminé le long de la ligne circonférentielle médiane (A-A) par mètre de longueur circonférentielle de la bande de roulement (1) est de 26 à 31.

4. Pneumatique de véhicule selon l'une des revendications 1 à 3, **caractérisé en ce que** les rainures transversales (6) et les incisions (9) dans les rangées de blocs côté épaulement (2) s'étendent selon un angle (α) de 75° à 86° par rapport à la direction circonférentielle.

5. Pneumatique de véhicule selon l'une des revendications 1 à 4, **caractérisé en ce que** les rainures transversales (7) et les incisions (10) dans les rangées de blocs semi-centrales (3) s'étendent selon un angle (β) de 55° à 65° par rapport à la direction circonférentielle.

6. Pneumatique de véhicule selon l'une des revendications 1 à 5, **caractérisé en ce que** les rainures transversales (8) et les incisions (11) dans la rangée de blocs centrale (4) présentent des tronçons (8a₁) et (8a₂) qui, inclinés en sens opposés les uns par rapport aux autres, forment chacun avec la direction circonférentielle de la bande de roulement (1) un angle (γ) de 70° à 80°.

7. Pneumatique de véhicule selon l'une des revendications 1 à 6, **caractérisé en ce que** les rangées de blocs côté épaulement (2) ou leurs blocs (2a) présentent une largeur maximale (B₂) projetée dans la direction axiale de 19 % à 25 % de la largeur (B) de la bande de roulement (1), les rangées de blocs semi-centrales (3) ou leurs blocs (3a) présentent une largeur maximale (B₃) projetée dans la direction axiale de 13 % à 17 % de la largeur (B) de la bande de roulement et la rangée de blocs centrale (4) ou ses blocs (4a) présentent une largeur maximale (B₄) projetée dans la direction axiale de 11 % à 15 % de la largeur (B) de la bande de roulement.

8. Pneumatique de véhicule selon l'une des revendications 1 à 7, **caractérisé en ce que** les rainures circonférentielles (5) sont conçues de telle sorte que, lorsque l'on regarde à travers les rainures circonférentielles (5) exactement dans la direction circonférentielle, une largeur minimale de 2,00 mm est présente en tout point des rainures circonférentielles (5).
